# FASCICULE DE BREVET EUROPEEN

(11) **EP 1 691 382 B1**
(45) Date de publication et mention de la délivrance du brevet: **27.01.2010**
(21) Numéro de dépôt: 06356012.2
(22) Date de dépôt: 10.02.2006
(51) Int. Cl.: H01G 2/18

(54) **Condensateur de puissance à dispositif de déconnexion**
Leistungskondensator mit Abschaltungseinrichtung
Power capacitor with a disconnecting device

(30) Priorité: 11.02.2005 FR 0501546
(43) Date de publication de la demande: 16.08.2006
(73) Titulaire: PREFATECH, 74940 Annecy Le Vieux (FR)
(72) Inventeur: Masset, Daniel, 73800 Les Marches (FR)
(74) Mandataire: Poncet, Jean-François

(56) Documents cités:
- EP-A- 0 093 455
- EP-A- 0 530 115
- EP-A- 1 115 128
- DE-A1- 3 440 683
- DE-A1- 4 237 282
- FR-A- 2 782 411
- GB-A- 2 204 996

## Description

La présente invention concerne les condensateurs de puissance tels que ceux généralement utilisés pour la correction du facteur de puissance dans la distribution électrique basse tension.

On connaît de tels condensateurs de puissance constitués d'un ou plusieurs éléments de condensateur, chaque élément comportant un enroulement cylindrique de couches isolantes et de couches conductrices de l'électricité formant une première et une seconde électrodes ou armatures de type autocicatrisant isolées l'une de l'autre. En pratique, un élément de condensateur est réalisé par l'enroulement de films plastiques diélectriques métallisés, et le condensateur consiste en un assemblage d'éléments bobinés, connectés selon un arrangement série et/ou parallèle en fonction de la puissance et de la tension désirées.

Le condensateur est dit autocicatrisant lorsque la présence de défauts mineurs dans le film diélectrique entraîne un claquage localisé qui conduit à l'évaporation des électrodes au voisinage du défaut, sans dommage pour les portions adjacentes du film. Lors de sollicitations anormales, notamment d'une surtension ou d'une élévation de température, un claquage du film diélectrique peut devenir non autocicatrisant, c'est-à-dire trop important pour permettre l'autocicatrisation du condensateur. L'augmentation résultante du courant qui traverse l'élément provoque une élévation de température au voisinage du défaut et une production de gaz de décomposition du film plastique diélectrique. L'élément étant généralement disposé dans un boîtier étanche, le boîtier peut exploser sous l'effet de la pression produite par les gaz.

Pour éviter les risques d'explosion, plusieurs solutions ont déjà été proposées.

Une première solution consiste à introduire le condensateur dans un boîtier métallique étanche dont une partie de paroi extérieure peut se déformer et provoquer l'arrachement de connexions qui relient le condensateur au réseau électrique. Dans le boîtier, le condensateur peut avantageusement être noyé dans une huile diélectrique, évitant les réamorçages et les explosions. Il faut toutefois utiliser de grandes quantités d'huile, ce qui augmente les risques d'incendies. Avec ou sans huile diélectrique, une telle solution présente l'inconvénient d'une grande difficulté de montage due au besoin d'étanchéité avec en plus la présence éventuelle d'un liquide.

Les documents EP-A-0 356 348 et EP-A-0 530 115 décrivent une autre solution dans laquelle chaque élément de condensateur est logé dans la cavité intérieure d'un boîtier rigide délimité par une paroi périphérique étanche en une résine diélectrique, et comprend une membrane intermédiaire, déformable, placée au voisinage immédiat d'une face d'extrémité d'un élément à enroulement cylindrique axial de deux électrodes de type autocicatrisant isolées l'une de l'autre. La membrane déformable intermédiaire, dont la périphérie est solidarisée de façon étanche à la paroi périphérique, peut se déformer et se déplacer axialement sous l'action de la pression des gaz produits par la décomposition d'une portion de l'élément à enroulement cylindrique en cas de claquage non autocicatrisant. Un premier conducteur d'entrée comprend une portion radiale connectée électriquement à la première électrode, selon la première face d'extrémité de l'enroulement cylindrique, et se raccordant à une seconde portion axiale tendue entre un point fixe solidaire de l'enroulement cylindrique et la zone centrale de la membrane déformable. En cas de claquage non autocicatrisant, la membrane déformable exerce une traction axiale sur la seconde portion axiale cassable de premier conducteur d'entrée, et produit sa rupture et la déconnexion du condensateur.

Cette structure est cependant délicate à manipuler lors du montage, et l'étanchéité de la liaison entre la membrane déformable intermédiaire et la paroi périphérique est difficile à réaliser. Ceci peut entraîner de nombreux disfonctionnements du composant final, astreignant le fabriquant à de multiples contrôles, et donc à un coût de fabrication très élevé. Et la constatation des défauts ne peut se faire qu'après montage complet du condensateur, de sorte que les défauts éventuels ne sont plus réparables et conduisent à mettre le condensateur entier au rebut.

Le document EP-A-0 548 713 décrit un condensateur électrique à deux bobines contenues dans un boîtier métallique. L'une des connexions du condensateur est assurée par un conducteur métallique à extrémités librement mobiles et dont la portion intermédiaire traverse deux éléments en matière plastique dont l'un est fixe et l'autre est mobile et sollicité par un diaphragme. Si la pression augmente dans le boîtier, le diaphragme repoussé par les gaz déplace l'élément mobile en travers du conducteur métallique, de sorte que les éléments en matière plastique agissent comme une lame et une contre-lame pour sectionner le conducteur métallique et déconnecter le condensateur.

Cependant, cette structure comporte toujours de très nombreux éléments dont l'agencement et le montage ne peuvent être que manuels, longs et délicats. Il en résulte là encore de nombreux disfonctionnements du composant final, obligeant le fabricant à de nombreux contrôles qui induisent un coût élevé du produit final.

Le document FR 2 782 411 enseigne de noyer la bobine de condensateur dans une résine elle-même contenue dans un boîtier externe rigide. Une membrane déformable étanche est tenue dans le boîtier par une couronne rapportée, et assure la déconnexion du condensateur par traction axiale jusqu'à rupture de l'un des conducteurs. Le montage reste délicat, manuel et peu sûr.

Dans le document DE 34 40 683, un dispositif de déconnexion est placé latéralement, sur le côté d'un ensemble de bobines, et est sollicitée par une partie latérale déformable du boîtier. Le montage est très complexe, notamment pour le passage des conducteurs, et l'étanchéité n'est pas assurée. La déconnexion est assurée par traction axiale sur un conducteur, jusqu'à sa rupture.

Le document EP 0 093 455 enseigne de placer les conducteurs de sortie sur une partie déformable du boîtier. La déformation du boîtier provoque la traction axiale des conducteurs, jusqu'à rupture. Les bornes de sortie sont alors mobiles, ce qui n'est pas acceptable dans le cas de condensateurs de puissance.

Un premier problème proposé par l'invention est de simplifier sensiblement le montage d'un condensateur de puissance autocicatrisant étanche muni d'un dispositif de déconnexion en cas de claquage non autocicatrisant, tout en garantissant une grande fiabilité grâce à une étanchéité certaine du boîtier contenant le condensateur.

Ainsi, l'invention vise à fournir un condensateur de puissance fiable et à faible coût de fabrication.

L'invention doit pouvoir être appliquée à des condensateurs triphasés ou monophasés.

Selon un autre aspect, l'invention vise à simplifier les moyens de connexion électrique des condensateurs triphasés autocicatrisants étanches à dispositif de déconnexion.

Pour atteindre ces objets ainsi que d'autres, l'invention propose un condensateur de puissance dans un carter extérieur étanche, comportant un bobinage cylindrique axial de condensateur ayant :
- au moins un premier enroulement cylindrique axial d'une première et d'une seconde armatures séparées par une couche d'isolant,
- une première et une seconde faces extrêmes de connexion opposées,
- une face latérale cylindrique,
- une première et une seconde couches conductrices de connexion, portées respectivement par la première et par la seconde faces extrêmes de connexion, connectées respectivement à la première armature et à la seconde armature du premier enroulement, et connectées électriquement respectivement à un premier et à un autre conducteurs de sortie,
- un passage axial cylindrique prévu au centre du bobinage pour le passage d'au moins le premier conducteur de sortie,
- un dispositif de déconnexion disposé selon la première face extrême de connexion,
   le dispositif de déconnexion comportant :

- sur une face située en vis-à-vis de la première face extrême de connexion, une zone déformable de paroi de carter extérieur, qui est déformable axialement selon l'axe de l'enroulement,
- un sectionneur intérieur, solidaire d'une partie centrale de ladite zone déformable de paroi, et en prise avec au moins un tronçon sectionnable d'au moins le premier conducteur de sortie pour le sectionner par un déplacement axial du sectionneur intérieur avec la zone déformable de paroi de carter vers l'extérieur.

Le condensateur ainsi proposé est de type auto protégé du fait de la présence d'un sectionneur intérieur venant efficacement sectionner au moins le premier conducteur de sortie lors d'une déformation de la zone déformable de paroi vers l'extérieur, provoquée par la poussée des gaz produits par un claquage non autocicatrisant du condensateur. En outre, les problèmes d'étanchéité sont résolus, car la zone de paroi de carter extérieure déformable axialement selon l'axe d'enroulement, qui joue le rôle de la membrane déformable de capsule des documents de l'art antérieur, est nécessairement étanche vis-à-vis du reste du carter. Le montage du condensateur est sensiblement simplifié, par le fait qu'il n'y a plus nécessité de rapporter une capsule dans le carter et d'assurer l'étanchéité périphérique de ladite capsule.

Le montage du condensateur peut encore être considérablement simplifié, et la fiabilité du dispositif de protection peut encore être sensiblement améliorée, en prévoyant que :
- le carter extérieur étanche est formé de l'assemblage de deux parties de carter ayant chacune une paroi transversale extrême respective et un tronçon respectif de paroi latérale et se raccordant l'une à l'autre par engagement axial des tronçons respectifs de paroi latérale,
- une substance pâteuse telle qu'une graisse de silicone est appliquée autour du sectionneur intérieur et sur la face intérieure de la zone déformable de paroi de carter,
- une résine polymérisée remplit l'espace intérieur du carter extérieur étanche autour du bobinage cylindrique axial et du sectionneur intérieur.

La substance pâteuse appliquée autour du sectionneur intérieur et sur la face intérieure de la zone déformable de paroi de carter empêche tout collage des éléments constitutifs du sectionneur intérieur et/ou de la zone déformable de paroi de carter avec la résine injectée dans l'espace intérieur du carter extérieur étanche. On s'assure ainsi que la zone déformable de paroi puisse être mobile par rapport au bobinage du condensateur.

En utilisant une graisse de silicone comme substance pâteuse, on assure simultanément un étouffement des arcs susceptibles de s'établir lors du sectionnement des tronçons sectionnables de conducteur par le sectionneur intérieur.

La résine assure simultanément le collage des deux parties de carter l'une à l'autre, l'étanchéité du condensateur, et le renforcement mécanique du carter.

Selon l'invention, on peut faciliter encore le montage du condensateur en prévoyant des moyens par lesquels le sectionneur intérieur peut être assemblé sur le bobinage lors d'une étape préalable réalisée à l'extérieur du carter. Lors de cette étape préalable, le sectionneur intérieur et les conducteurs à sectionner sont directement accessibles et aisément adaptables. Il faut ensuite que l'ensemble bobinage-sectionneur intérieur puisse être introduit dans le carter, et que cette seule manoeuvre d'introduction produise la solidarisation du sectionneur intérieur avec la zone déformable de paroi de carter, tout en respectant l'étanchéité.

A cet effet, on peut prévoir des moyens de liaison entre le bobinage et le sectionneur intérieur, pour que le sectionneur intérieur soit porté par le bobinage, et on peut prévoir des moyens d'accouplement automatique entre le sectionneur intérieur et la zone déformable de paroi de carter.

En pratique, l'invention peut prévoir que le sectionneur intérieur comporte, après montage, un tronçon fileté axial engagé dans un logement borgne taraudé porté par la partie centrale de la zone déformable de paroi.

De préférence, un moyen de blocage en rotation s'oppose à la rotation relative axiale du sectionneur intérieur par rapport au bobinage de condensateur, de façon à faciliter l'opération de solidarisation par vissage lors du montage.

Ainsi, le sectionneur intérieur est rendu solidaire de la zone déformable de paroi par vissage, vissage que l'opérateur effectue lors du montage en communiquant au bobinage du condensateur un couple de rotation. Le sectionneur intérieur étant fixe en rotation selon l'axe du bobinage du condensateur par rapport à ce même bobinage, celui-ci est alors aussi entraîné en rotation. Ainsi, une fois que l'opérateur a effectué le montage du dispositif de déconnexion disposé selon la première face extrême de connexion du bobinage, celui-ci n'a plus qu'à engager le bobinage axial de condensateur muni du dispositif de déconnexion dans le carter extérieur étanche et lui appliquer un couple de vissage pour que le sectionneur intérieur soit vissé dans le logement borgne taraudé porté par la partie centrale de la zone déformable de paroi. Le montage du condensateur final est ainsi grandement simplifié.

Selon un mode de réalisation avantageux de l'invention, le condensateur de puissance comporte un manchon tubulaire bloqué en rotation et translation sur le bobinage cylindrique axial, engagé dans le passage axial cylindrique et autour du premier conducteur de sortie. Le manchon tubulaire a une extrémité qui dépasse du passage axial cylindrique selon la première face extrême de connexion et qui présente des moyens pour guider le sectionneur intérieur en translation axiale.

Ainsi, le déplacement du sectionneur intérieur lors d'une déformation de la zone déformable de paroi de carter ne pourra s'effectuer que strictement selon l'axe de l'enroulement.

Le moyen de blocage en rotation peut avantageusement comporter :
- une lame plane longitudinale engagée selon l'axe d'enroulement dans le manchon et séparant l'intérieur de celui-ci en deux portions demi-cylindriques sensiblement égales,
- une rainure pratiquée dans le sectionneur intérieur, dans laquelle vient s'engager la lame plane.

Il est ainsi réalisé de façon simple et économique un blocage en rotation du sectionneur intérieur par rapport au bobinage de condensateur. Ceci permet, lors du montage, de communiquer au sectionneur via le bobinage de condensateur un couple de vissage pour engager le tronçon fileté axial du sectionneur dans le logement borgne taraudé porté par la partie centrale de la zone déformable de paroi, assurant de façon aisée et fiable la solidarisation du sectionneur sur la zone déformable de paroi de carter.

Selon un mode de réalisation de l'invention, la zone déformable de paroi de carter comporte des ondulations circulaires concentriques.

La présence d'ondulations circulaires concentriques sur la zone déformable de paroi de carter permet à la partie centrale de la zone déformable de paroi d'effectuer un déplacement d'une grande distance selon l'axe du bobinage. L'utilisation d'ondulations circulaires concentriques permet en outre un équilibrage des efforts sur la membrane, privilégiant un déplacement de la partie centrale de la zone déformable de paroi uniquement selon l'axe du bobinage.

Selon l'invention, la zone déformable de paroi de carter a une forme générale de cône dont le sommet est dirigé vers le bobinage de condensateur, le sectionneur intérieur étant fixé audit sommet du cône.

Grâce à cette forme, lors de la déformation axiale de la zone déformable de paroi de carter sous l'action d'une surpression intérieure, celle-ci ne vient pas dépasser en formant une protubérance sur la face de carter extérieur étanche où elle est située. On évite ainsi tout conflit éventuel pouvant se présenter si d'autres composants, objets ou parois étaient placés au voisinage de cette face de carter extérieur étanche. Cette forme de la zone déformable de paroi de carter garantit que sa déformation restera à tout moment possible puisque sans aucun conflit avec le voisinage, et donc garantit que la déconnexion pourra s'opérer de façon efficace et empêcher l'explosion du condensateur.

Selon un mode de réalisation de l'invention, le condensateur de puissance peut être triphasé, comportant le premier enroulement, ainsi qu'un second et un troisième enroulements cylindriques, les trois enroulements étant coaxiaux et superposés autour d'un axe commun, se succédant selon la direction radiale pour former un enroulement central, un enroulement intermédiaire et un enroulement externe, chaque enroulement ayant ses propres première et seconde couches conductrices de connexion portées respectivement par les première et seconde faces de connexion du bobinage.

Le dispositif de déconnexion est ainsi adapté pour un condensateur de type triphasé, dont l'agencement en lui-même permet une économie de place.

Selon un autre aspect de l'invention, il est prévu un condensateur de puissance triphasé à enroulements coaxiaux superposés, dans lequel :
- deux premières couches conductrices de connexion de deux enroulements sont connectées électriquement l'une à l'autre et au premier conducteur de sortie,
- la première couche conductrice de connexion du troisième enroulement est connectée à un second conducteur de sortie, les premier et second conducteurs de sortie traversant le passage axial cylindrique,
- les trois secondes couches conductrices de connexion des trois enroulements sont connectées électriquement à un troisième, à un quatrième et à un cinquième conducteurs de sortie respectifs.

On trouve ainsi dans le carter extérieur étanche trois bobinages cylindriques coaxiaux superposés de condensateur dont deux sont connectés électriquement de façon interne. L'ensemble ne comporte alors que cinq conducteurs au lieu de six : on réalise ainsi une économie sur la connectique interne. Il reste néanmoins possible de connecter extérieurement les bobinages de condensateur soit dans une configuration dite en triangle, soit dans une configuration dite en étoile, à la guise de l'utilisateur.

Avantageusement, la connexion électrique des deux premières couches conductrices de connexion de deux enroulements peut être constituée par une continuité de métallisation de la première face extrême du bobinage de condensateur entre deux premières couches conductrices de connexion adjacentes.

On notera que les moyens de connexion interne de deux bobinages du condensateur triphasé pour simplifier la connectique constituent en eux-mêmes une invention indépendante de la structure générale du dispositif de déconnexion à zone déformable de paroi de carter.

De préférence, des tronçons sectionnables des premier et second conducteurs de sortie peuvent être en prise avec le sectionneur interne et avoir une structure facilitant leur rupture par le sectionneur intérieur.

Ainsi, par le sectionnement des tronçons sectionnables des premier et second conducteurs de sortie par le sectionneur intérieur, on empêche toute alimentation des trois bobinages de condensateur contenus dans le carter extérieur étanche. Après sectionnement, il n'y a ainsi plus aucun enroulement du bobinage de condensateur triphasé alimenté.

Dans ce mode de réalisation, seuls les premier et second conducteurs de sortie traversent le passage axial cylindrique, ce qui réduit simultanément le diamètre nécessaire de ce passage, et ce qui optimise la capacité du condensateur à volume donné.

De façon avantageuse, la structure facilitant la rupture des tronçons sectionnables des premier et second conducteurs de sortie en prise avec le sectionneur intérieur peut être de type fusible dénudé.

On obtient ainsi un effet cumulatif destiné à faciliter le sectionnement des tronçons sectionnables. En effet, les tronçons sectionnables étant de type fusible, l'échauffement produit par le claquage non autocicatrisant du condensateur de puissance va fragiliser les tronçons sectionnables, facilitant ainsi leur rupture par sectionnement. En outre, les tronçons sectionnables étant dénudés, cela diminue l'effort nécessaire à leur sectionnement puisque ceux-ci ne comportent pas de gaine isolante qu'il faut également sectionner.

Avantageusement, les premier et second conducteurs de sortie peuvent passer par le passage axial cylindrique au centre de l'enroulement central, les tronçons sectionnables à structure facilitant leur rupture passant par une des portions demi-cylindriques du manchon séparées l'une de l'autre par une paroi électriquement isolante pour isoler l'un de l'autre les tronçons sectionnables dénudés. Par exemple, la lame plane longitudinale engagée selon l'axe d'enroulement dans le manchon et séparant l'intérieur de celui-ci en deux portions demi-cylindriques sensiblement égales peut jouer le rôle de paroi électriquement isolante pour isoler l'un de l'autre les tronçons sectionnables dénudés.

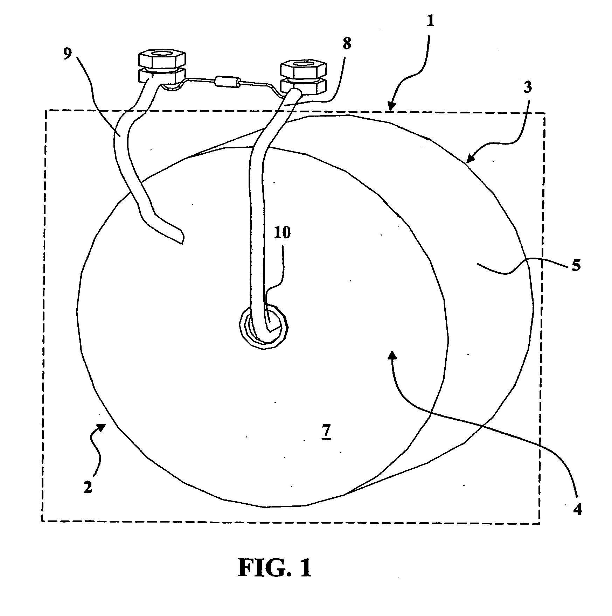

D'autres objets, caractéristiques et avantages de la présente invention ressortiront de la description suivante de modes de réalisation particuliers, faite en relation avec les figures jointes, parmi lesquelles :
- ta figure 1. est une vue en perspective selon une première face des éléments internes d'un condensateur de puissance de type monophasé selon un mode de réalisation de l'invention ;
- la figure 2 représente les éléments internes du condensateur de la figure 1 en vue en perspective, orientée selon la face opposée à celle de la figure 1 ;
- la figure 3 est une vue des éléments internes d'un condensateur de puissance de type triphasé selon un autre mode de réalisation de l'invention selon une première face extrême de connexion ;
- la figure 4 est une vue en perspective des éléments internes du condensateur de la figure 3 selon la face opposée à celle de la figure 3 ;
- la figure 5 est une représentation schématique équivalente du câblage des bobinages cylindriques axiaux de condensateur inclus dans un condensateur de puissance de type triphasé selon l'invention ;
- la figure 6 est une coupe axiale d'un sectionneur intérieur et d'un manchon tubulaire selon un mode de réalisation de l'invention ;
- la figure 7 est une coupe axiale illustrant la structure du sectionneur intérieur, du manchon tubulaire et des premier et second conducteurs de sortie d'un condensateur de puissance de type triphasé selon un mode de réalisation de l'invention ;
- la figure 8 est une vue en coupe axiale d'un dispositif de déconnexion disposé selon la première face extrême de connexion sur un condensateur de puissance selon l'invention dont le montage est achevé et qui est en fonctionnement normal ;
- la figure 9 est une vue en coupe partielle du dispositif de déconnexion de la figure 8 lorsque celui-ci a subit un claquage non autocicatrisant ; et
- la figure 10 est une vue en coupe axiale illustrant l'assemblage d'un condensateur de puissance selon l'invention.

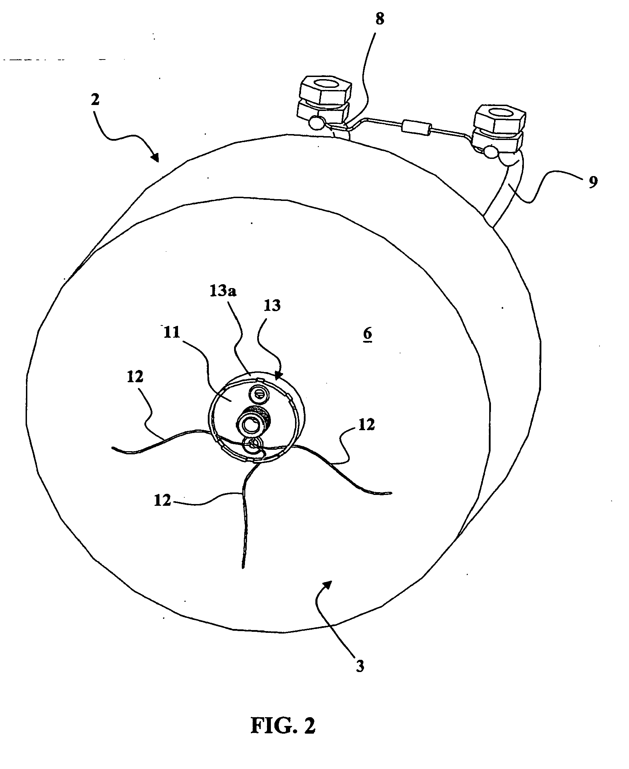

Comme le représentent les figures 1 et 2, un condensateur de puissance selon la présente invention comporte un bobinage 1 cylindrique axial de condensateur ayant un premier enroulement 2 cylindrique axial, une première 3 et une seconde 4 faces extrêmes de connexion opposées, une face latérale cylindrique 5, une première 6 et une seconde 7 couches conductrices de connexion, portées respectivement par la première 3 et par la seconde 4 faces extrêmes de connexion, connectées électriquement respectivement à un premier conducteur de sortie 8 et à un autre conducteur de sortie 9. On distingue sur ces figures un passage axial cylindrique 10 prévu au centre du bobinage 1 pour le passage du premier conducteur de sortie 8.

Sur la figure 2, on distingue plus nettement sur la première face extrême de connexion 3 le dispositif de déconnexion comportant un sectionneur intérieur 11 en prise avec des tronçons sectionnables 12 du premier conducteur de sortie 8 pour les sectionner lors d'un déplacement axial du sectionneur intérieur 11.

Le sectionneur intérieur 11 est engagé dans une extrémité 13a d'un manchon tubulaire 13, lui-même bloqué en rotation et en translation dans le passage axial cylindrique 10 prévu au centre du bobinage 1.

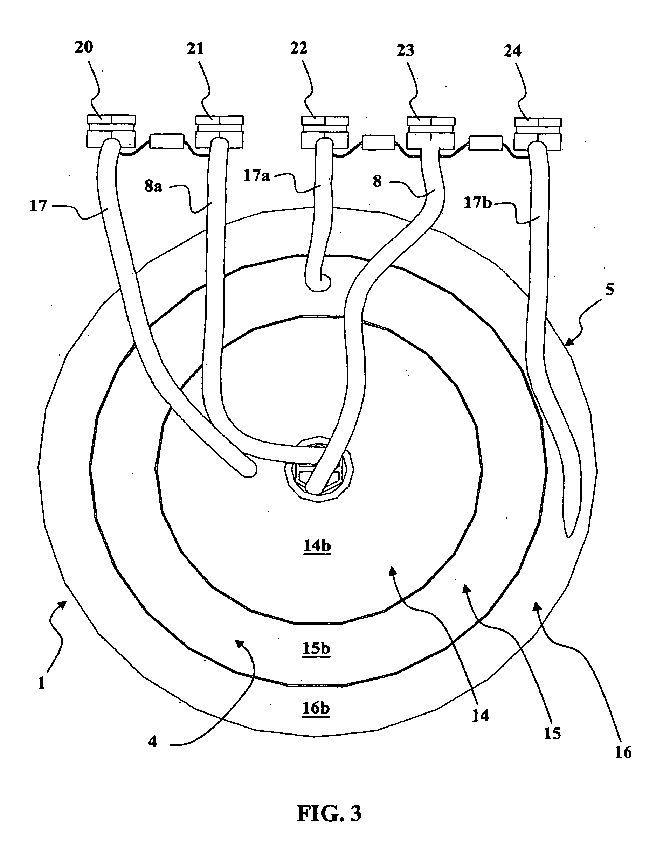

La figure 3 illustre un condensateur selon l'invention, de type triphasé, portant le premier enroulement 2 cylindrique ainsi qu'un second et un troisième enroulements cylindriques, les trois enroulements étant coaxiaux autour d'un axe commun, se succédant selon la direction radiale pour former un enroulement central 14, un enroulement intermédiaire 15 et un enroulement externe 16, chaque enroulement ayant ses propres secondes couches conductrices de connexion 14b, 15b et 16b portées par la seconde face extrême de connexion 4.

Les trois secondes couches conductrices de connexion 14b, 15b et 16b des trois enroulements 14, 15 et 16 sont connectées électriquement à un troisième 17, un quatrième 17a et un cinquième 17b conducteurs de sortie respectifs. Le premier conducteur de sortie 8 et le second conducteur de sortie 8a traversent le passage axial cylindrique 10 prévu au centre du bobinage 1.

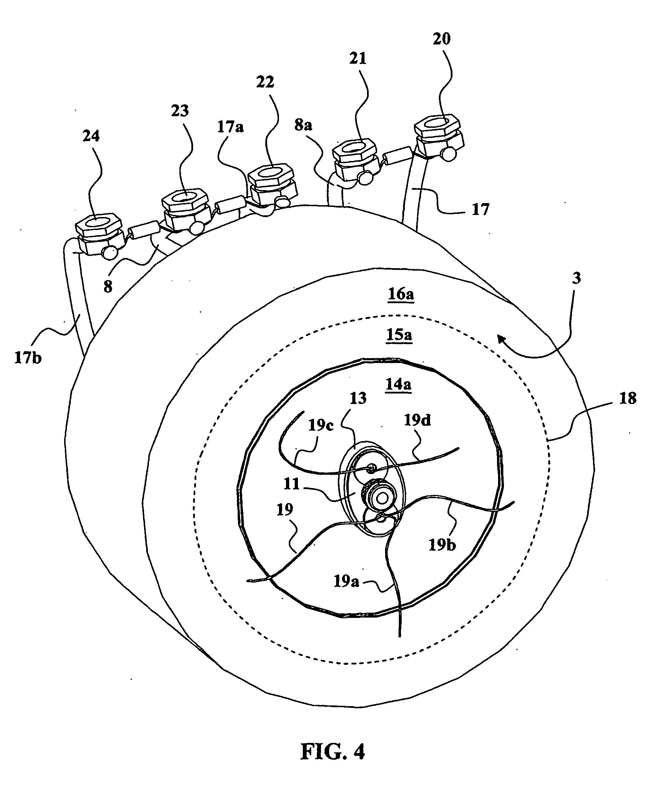

Sur la figure 4 est représenté le condensateur de puissance triphasé de la figure 3 avec la première face extrême de connexion 3 visible. On distingue les premières couches conductrices de connexion 14a, 15a et 16a respectives de l'enroulement central 14, de l'enroulement intermédiaire 15 et de l'enroulement externe 16. Les deux premières couches conductrices de connexion 15a et 16a sont connectées électriquement l'une à l'autre par une continuité de métallisation (figurée par la ligne en pointillés 18) de la première face extrême de connexion 3 du bobinage 1 de condensateur. Les deux premières couches conductrices de connexion 15a et 16a sont aussi connectées électriquement au premier conducteur de sortie 8 par l'intermédiaire de trois tronçons sectionnables 19, 19a et 19b ayant des portions radiales respectives. La première couche conductrice de connexion 14a de l'enroulement central 14 est connectée à un second conducteur de sortie 8a par l'intermédiaire de tronçons sectionnables 19c et 19d ayant également des portions radiales respectives.

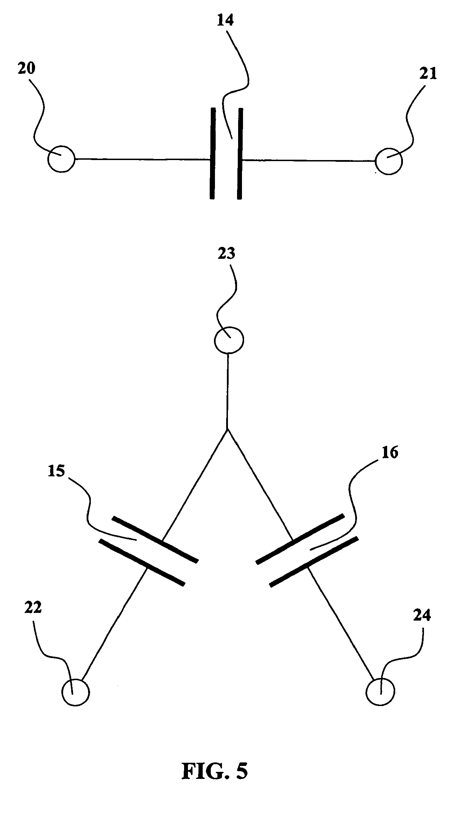

Sur la figure 5 est illustré schématiquement le câblage électrique du condensateur triphasé selon l'invention représenté sur les figures 3 et 4. On y retrouve les enroulements intermédiaire 15 et externe 16 connectés électriquement l'un à l'autre et reliés électriquement à la borne de connexion 23. L'enroulement intermédiaire 15 est en outre relié à une borne de connexion 22 et l'enroulement externe 16 est relié à une borne de connexion 24. L'enroulement central 14 est quant à lui électriquement indépendant des enroulements intermédiaire 15 et externe 16, relié électriquement à deux bornes de connexion 20 et 21.

On comprendra aisément à l'aide de la figure 5 que les enroulements 14, 15 et 16 définissent trois condensateurs qu'il est possible de connecter indifféremment dans une configuration en étoile ou en triangle. La configuration en triangle est réalisée de façon pratique en reliant d'une part les bornes de connexion 20 et 22, et en reliant d'autre part les bornes de connexion 21 et 24. La configuration en étoile se réalise de façon pratique en reliant, par exemple, les bornes de connexion 21 et 23.

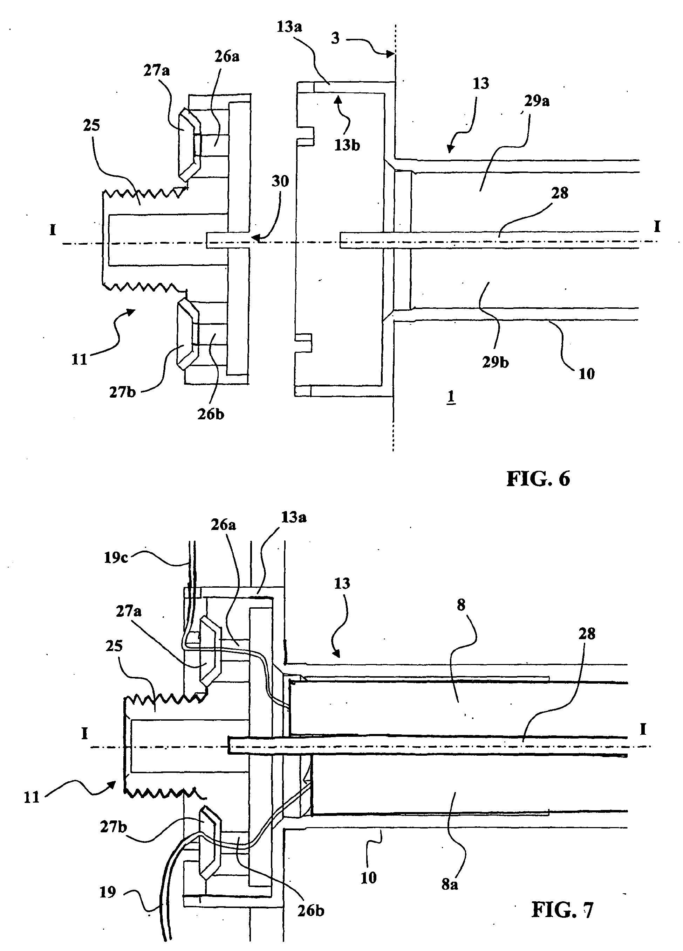

La figure 6 illustre une vue en coupe du dispositif de déconnexion disposé selon la première face extrême de connexion 3 du bobinage de condensateur 1. On y trouve représenté le sectionneur intérieur 11 comportant un tronçon fileté axial 25 ainsi que deux passages axiaux 26a et 26b pour le passage de parties axiales des tronçons sectionnables 12, 19, 19a, 19b, 19c ou 19d. Ces passages axiaux 26a et 26b débouchent sur la face du sectionneur intérieur 11 située du côté du tronçon fileté axial 25. Sur cette face se trouvent des rondelles 27a et 27b en forme de cuvette et à arête vive, coaxiales aux passages axiaux 26a et 26b.

Le manchon 13 est engagé dans le passage axial cylindrique 10 et comporte une lame plane longitudinale 28 engagée selon l'axe d'enroulement I-I dans le manchon 13 et séparant l'intérieur de celui-ci en deux portions demi-cylindriques 29a et 29b sensiblement égales. Lorsque le sectionneur intérieur 11 est engagé dans l'extrémité 13a du manchon 13, la lame plane longitudinale 28 coopère avec une rainure 30 pratiquée dans le sectionneur intérieur 11. La lame plane longitudinale 28 et la rainure 30 constituent ainsi un moyen de blocage en rotation du sectionneur intérieur 11 par rapport au bobinage 1 de condensateur, le manchon tubulaire 13 étant bloqué en rotation et translation par rapport au bobinage de condensateur 1.

Une autre solution pour réaliser un moyen de blocage en rotation du sectionneur intérieur 11 par rapport au bobinage 1 est illustrée sur la figure 4.

Dans ce cas, on donne à l'extrémité 13a du manchon 13 et au sectionneur intérieur 11 des formes complémentaires non circulaires leur permettant de s'emboîter pour coulisser sans pivoter. Ainsi, sur la figure 4, la forme utilisée est celle d'un ovale.

En considérant à nouveau la figure 6, l'extrémité 13a du manchon dépassant du passage axial cylindrique 10 selon la première face extrême de connexion 3 comporte une surface 13b parallèle à l'axe I-I qui est aussi l'axe de déplacement du sectionneur intérieur 11. Ainsi, la surface 13b constitue un moyen de guidage en translation axiale selon l'axe I-I du sectionneur intérieur 11.

Sur la figure 7, on a représenté une vue en coupe du dispositif de déconnexion disposé selon la première face extrême de connexion 3 lorsque le condensateur de puissance des figures 3 et 4 est en état de marche normale. On y distingue le premier conducteur de sortie 8 et le second conducteur de sortie 8a engagés chacun dans une portion demi-cylindrique respective 29a ou 29b du manchon 13, ainsi que le sectionneur intérieur 11 engagé dans l'extrémité 13a du manchon 13 dépassant du passage axial cylindrique 10. On distingue également les tronçons sectionnables 19, 19a, 19b et 19c des premier 8 et second 8a conducteurs de sortie, avec leurs portions radiales en prise avec le sectionneur intérieur 11. Les tronçons sectionnables 19, 19a, 19b, 19c et 19d passent par les passages axiaux 26a et 26b. Dans un souci de clarté, seuls les tronçons sectionnables 19 et 19c sont représentés. Les tronçons sectionnables 19a, 19b et 19d ne figurent pas sur cette vue en coupe de la figure 7.

Les tronçons sectionnables 19, 19a, 19b, 19c et 19d ont une structure facilitant leur rupture. Par exemple, leur structure peut être de type fusible dénudé telle que représentée sur la figure 7. Etant dénudés, les tronçons sectionnables 19, 19a et 19b (du second conducteur de sortie 8a) d'une part, et les tronçons sectionnables 19c et 19d (du premier conducteur de sortie 8) d'autre part, doivent être isolés les uns des autres pour éviter toute connexion électrique interne du premier conducteur de sortie 8 avec le second conducteur de sortie 8a. Il y a donc nécessité d'intégrer dans le manchon 13, afin de les isoler, une paroi électriquement isolante. Avantageusement, on peut assurer cette fonction par la lame plane longitudinale 28, en prévoyant une lame en un matériau électriquement isolant.

On comprend aisément à l'aide du schéma de la figure 7 que lors du déplacement axial du sectionneur intérieur 11 selon l'axe d'enroulement I-I, les portions radiales des tronçons sectionnables 19, 19a, 19b, 19c et 19d vont se trouver au contact des arêtes vives des rondelles 27a et 27b et vont être sectionnées si la force de traction provoquant le déplacement du sectionneur intérieur 11 est suffisante. Le sectionnement résulte de la pénétration des arêtes vives des rondelles 27a et 27b dans les portions radiales des tronçons sectionnables 19, 19a, 19b, 19c et 19d.

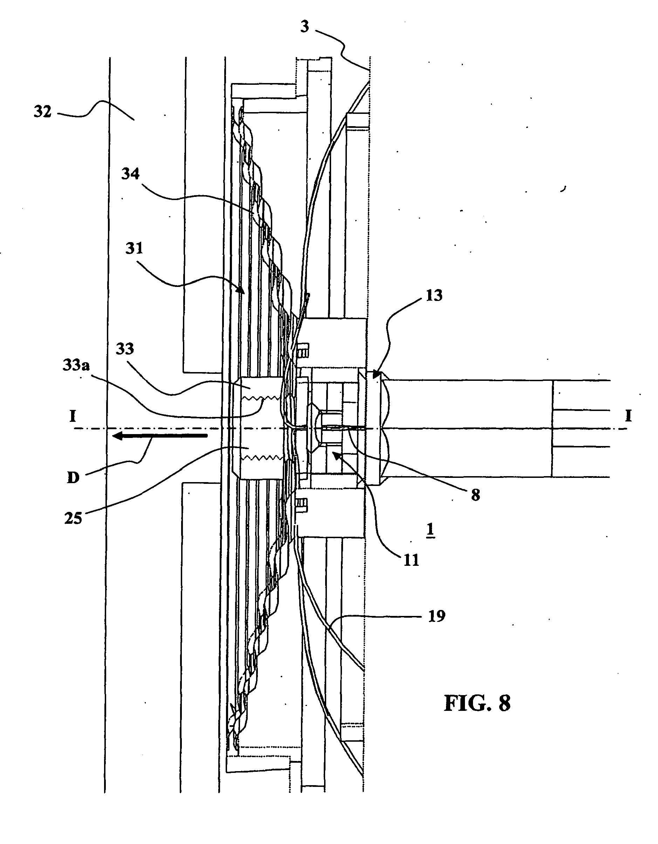

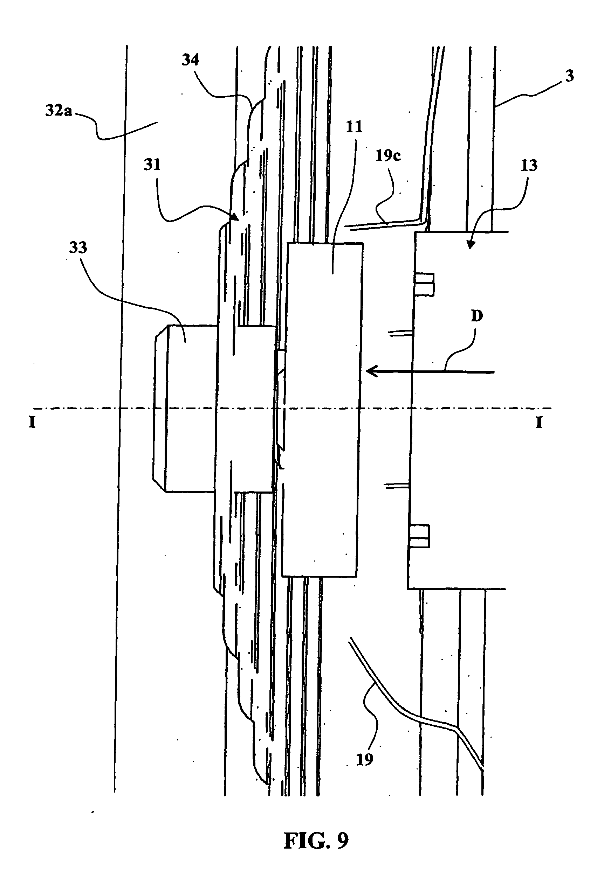

Sur les figures 8 et 9 est illustré le dispositif de déconnexion disposé selon la première face extrême de connexion 3, en prise avec la partie centrale 33 de la zone déformable 31 de paroi du carter extérieur étanche 32. Le tronçon fileté axial 25 est vissé dans un logement borgne taraudé 33a porté par la partie centrale 33 de la zone déformable 31 de paroi.

Le sectionneur intérieur 11 est ainsi solidaire de la partie centrale 33 de la zone déformable 31 de paroi. Lors d'une surpression gazeuse à l'intérieur du carter extérieur 32 étanche, la zone de déformation axiale 31 de la paroi de carter extérieur 32 peut ainsi entraîner en déplacement axial selon l'axe I-I le sectionneur intérieur 11, comme illustré par la flèche D.

Avantageusement, la zone déformable 31 de paroi de carter comporte des ondulations circulaires concentriques 34, et présente une forme générale de cône. A l'état de fonctionnement normal illustré sur la figure 8, le sommet du cône est dirigé vers le bobinage 1 de condensateur, le sectionneur intérieur 11 étant fixé audit sommet du cône. Les ondulations circulaires concentriques 34 de la zone déformable 31 de paroi permettent un déplacement de grande amplitude en translation axiale selon l'axe I-I de la partie centrale 33 de la zone déformable 31 de paroi. En outre, cette structure étant symétrique par rapport à l'axe I-I, cela permet de privilégier une déformation de la zone déformable 31 de paroi selon l'axe I-I uniquement.

La figure 9 représente la déformation de la zone déformable 31 de paroi lors d'un claquage non autocicatrisant du condensateur de puissance selon l'invention.

On constate que le cône de la zone déformable 31 de paroi s'est inversé par déformation de la zone déformable 31 de paroi. La partie centrale 33 de la zone déformable 31 de paroi s'est déplacée d'une distance D (vers la gauche sur la figure), entraînant avec elle le sectionneur intérieur 11 solidaire de la partie centrale 33 de la zone déformable 31 de paroi. Lors de ce déplacement D selon l'axe I-I, des tronçons sectionnables 19 et 19c ont été sectionnés. Il en est de même pour les tronçons sectionnables 19a, 19b et 19d, mais qui ne sont pas représentés ici sur la figure 9 dans un souci de clarté. Ainsi, le premier conducteur de sortie 8 et le second conducteur de sortie 8a sont déconnectés : le condensateur de puissance triphasé n'est plus alimenté.

La déformation de la zone déformable 31 de paroi est due à la poussée axiale de la pression des gaz produits par le claquage non autocicatrisant d'au moins l'un des trois enroulements 14, 15 ou 16.

Lorsque la zone déformable 31 de paroi atteint sa déformation maximale et que par conséquent la partie centrale 33 se trouve à une distance maximale de sa position d'origine, la partie centrale 33 ne dépasse pas sensiblement selon l'axe I-I au-delà du plan 132a définissant la position de repos de la première paroi transversale extrême 32a correspondante du carter extérieur étanche 32. Ainsi, on évite tout conflit dans l'espace avec des composants situés à côté du condensateur selon l'invention. Si ce n'était pas le cas, il pourrait y avoir un éventuel conflit, et la déconnexion pourrait se faire partiellement ou ne pas se faire du tout, ce qui risquerait de conduire à l'explosion du condensateur de puissance.

La zone déformable 31 de paroi doit posséder une certaine capacité à se déformer, conférée par le matériau utilisé pour sa fabrication. On a par exemple obtenu de bons résultats avec une zone déformable 31 de paroi constituée en polyamide 6.6 non chargé en fibres de verre.

Bien que déformable, la zone déformable 31 de paroi doit simultanément être mécaniquement résistante pour garantir l'étanchéité et la tenue mécanique lors d'un claquage du condensateur. Sa capacité de déformation est donc nécessairement limitée. La structure particulière du dispositif de déconnexion à sectionneur intérieur 11 selon l'invention permet néanmoins d'assurer une déconnexion fiable du condensateur par la seule déformation de la zone déformable 31 de paroi mécaniquement résistante et de taille limitée. La zone déformable 31 de paroi n'occupe qu'une partie de la première paroi transversale extrême 32a du carter extérieur 32.

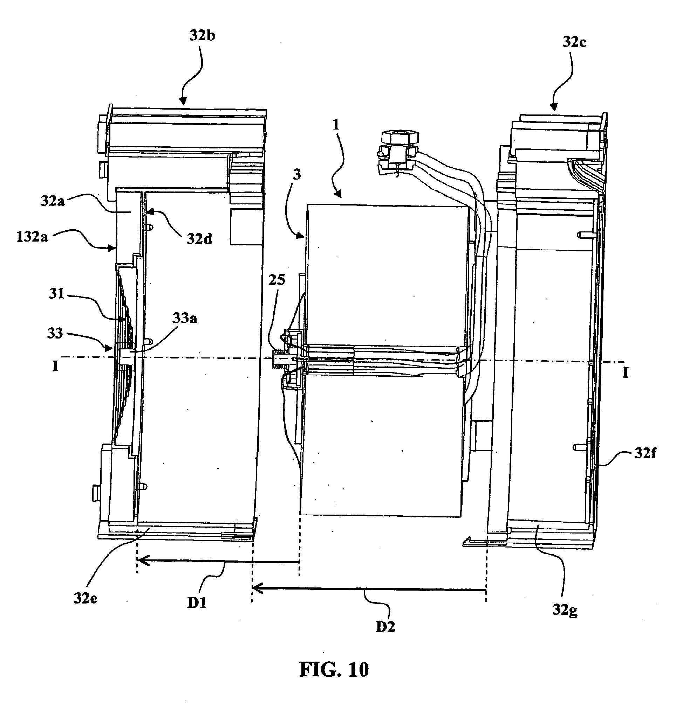

La figure 10 illustre schématiquement le montage d'un condensateur de puissance selon l'invention.

Sur cette figure, on distingue le carter extérieur étanche 32 constitué d'une première et d'une seconde parties de carter 32b et 32c. La première partie de carter 32b est fabriquée d'un seul tenant, comportant la première paroi transversale extrême 32a et un premier tronçon de paroi latérale 32e. La partie centrale de la première paroi transversale extrême 32a forme la zone déformable 31 de paroi. La seconde partie de carter 32c est fabriquée d'un seul tenant, comportant une seconde paroi transversale extrême 32f et un second tronçon de paroi latérale 32g.

Lors du montage, le bobinage 1 de condensateur muni de son dispositif de déconnexion sur sa première face extrême de connexion 3 est engagé selon le déplacement D1 dans la première partie de carter 32b, le tronçon fileté axial 25 du sectionneur intérieur 11 étant coaxial à la partie centrale 33 de la zone déformable 31 de paroi qui possède un logement borgne taraudé 33a. Un couple est ensuite appliqué au bobinage de condensateur 1 pour visser le tronçon fileté axial 25 dans le logement borgne taraudé 33a, ce qui a pour effet simultané d'amener la première face extrême de connexion 3 au contact avec la face interne 32d de la première partie de carter 32b.

On peut alors fixer les bornes de connexion 20, 21, 22, 23 et 24 sur la paroi latérale 32e de la première partie de carter 32b, puis venir fermer l'ensemble à l'aide de la seconde partie de carter 32c selon un déplacement D2. Les deux parties de carter 32b et 32c se raccordent l'une à l'autre par engagement axial de leurs tronçons respectifs de paroi latérale 32e et 32g.

Une fois le carter extérieur étanche 32 fermé, on injecte dans la cavité intérieure étanche du carter une résine polymérisable pour noyer le tout. L'injection de résine est avantageusement réalisée sous vide.

La résine assure, par collage, la solidarisation des deux parties de carter 32b et 32c l'une à l'autre. Le collage doit résister aux efforts de poussée axiale qui se produisent notamment sur la première partie de carter 32b lors d'une surpression interne due à un claquage non autocicatrisant du condensateur. On s'assurera d'une résistance de collage suffisante en choisissant par exemple de donner des valeurs similaires aux longueurs axiales des tronçons respectifs de paroi latérale 32e et 32g.

La résine assure simultanément l'étanchéité du condensateur, et participe à la résistance mécanique du carter extérieur 32.

Pour garantir le bon fonctionnement du dispositif de déconnexion du condensateur, il faut que ni la zone déformable 31 de paroi ni le sectionneur intérieur 11 ne soient collés par la résine injectée. Pour ce faire, il faut empêcher la résine, lors de son injection, d'atteindre la zone centrale de la première face extrême de connexion 3 où se trouve le dispositif de connexion, et l'empêcher de venir en contact avec la zone déformable 31 de paroi. A cet effet, une substance pâteuse est appliquée autour du sectionneur intérieur 11 et sur la face intérieure de la zone déformable 31 de paroi de première partie de carter 32b. On pourra avantageusement utiliser comme substance pâteuse une graisse de silicone. Ainsi, du fait de la présence de la graisse de silicone sur les zones du dispositif de déconnexion devant rester mobiles et sur la zone déformable 31 de paroi, la résine injectée n'atteint pas ces zones et ne peut donc les coller et empêcher par la suite leurs mouvements relatifs lors du fonctionnement du dispositif de déconnexion.

En outre, la première partie de carter 32b étant réalisée d'un seul tenant avec la zone déformable 31 de paroi, il n'y a aucun problème d'étanchéité selon la périphérie de la zone déformable 31 de paroi.

Le montage est ainsi grandement facilité, rapide et sûr.

Les bornes de connexion 20, 21, 22, 23 et 24, fixées sur la paroi latérale 32e, ne sont pas sollicitées par le mouvement du dispositif de déconnexion, et restent donc fixes.

La présente invention n'est pas limitée aux modes de réalisation qui ont été explicitement décrits, mais elle en inclut les diverses variantes et généralisations contenues dans le domaine des revendications ci-après.

## Revendications

1. Condensateur de puissance dans un carter extérieur (32) étanche, comportant un bobinage (1) cylindrique axial de condensateur ayant :
- au moins un premier enroulement (2) cylindrique axial d'une première et d'une seconde armatures séparées par une couche d'isolant,
- une première (3) et une seconde (4) faces extrêmes de connexion opposées,
- une face latérale cylindrique (5),
- une première (6) et une seconde (7) couches conductrices de connexion, portées respectivement par la première (3) et par la seconde (4) faces extrêmes de connexion, connectées respectivement à la première armature et à la seconde armature du premier enroulement (2), et connectées électriquement respectivement à un premier (8) et à un autre conducteur (9) de sortie,
- un passage (10) axial cylindrique prévu au centre du bobinage (1) pour le passage d'au moins le premier conducteur de sortie (8),
- un dispositif de déconnexion disposé selon la première face extrême de connexion (3),
**caractérisé en ce que** le dispositif de déconnexion comporte :
- sur une face située en vis-à-vis de la première face extrême de connexion (3), une zone déformable (31) de paroi de carter extérieur, qui est déformable axialement selon l'axe de l'enroulement,
- un sectionneur intérieur (11), solidaire d'une partie (33) de la zone déformable (31) de paroi, et en prise avec au moins un tronçon sectionnable (12) d'au moins le premier conducteur de sortie (8) pour le sectionner par un déplacement axial du sectionneur intérieur (11) avec la zone déformable (31) de paroi de carter vers l'extérieur.

2. Condensateur de puissance selon la revendication 1, **caractérisé en ce que** :
- le carter extérieur (32) étanche est formé de l'assemblage de deux parties de carter (32b, 32c) ayant chacune une paroi transversale extrême (32a, 32f) respective et un tronçon respectif (32e, 32g) de paroi latérale et se raccordant l'une à l'autre par engagement axial des tronçons respectifs (32e, 32g) de paroi latérale,
- une substance pâteuse telle qu'une graisse de silicone est appliquée autour du sectionneur intérieur (11) et sur la face intérieure de la zone déformable (31) de paroi de carter,
- une résine polymérisée remplit l'espace intérieur du carter extérieur (32) étanche autour du bobinage (1) cylindrique axial et du sectionneur intérieur (11).

3. Condensateur de puissance selon l'une des revendications 1 ou 2, **caractérisé en ce que** le sectionneur intérieur (11) comporte un tronçon fileté (25) axial engagé dans un logement borgne taraudé (33a) porté par la partie centrale (33) de la zone déformable (31) de paroi.

4. Condensateur de puissance selon l'une des revendications 1 ou 2, **caractérisé en ce qu'**un moyen de blocage en rotation (28) s'oppose à la rotation relative axiale du sectionneur intérieur (11) par rapport au bobinage (1) de condensateur.

5. Condensateur de puissance selon la revendication 4, **caractérisé en ce qu'**il comporte un manchon tubulaire (13) bloqué en rotation et translation sur le bobinage (1) cylindrique axial, engagé dans le passage (10) axial cylindrique et autour du premier conducteur de sortie (8), ayant une extrémité qui dépasse du passage (10) axial cylindrique selon la première face extrême de connexion (3), et qui présente des moyens pour guider le sectionneur intérieur (11) en translation axiale.

6. Condensateur de puissance selon la revendication 5, **caractérisé en ce que** le moyen de blocage en rotation comporte :
- une lame plane longitudinale (28) engagée selon l'axe d'enroulement (1-1) dans le manchon (13) et séparant l'intérieur de celui-ci en deux portions (29) demi-cylindriques sensiblement égales,
- une rainure (30) pratiquée dans le sectionneur intérieur (11), dans laquelle vient s'engager la lame plane (28).

7. Condensateur de puissance selon l'une quelconque des revendications 1 à 6, **caractérisé en ce que** la zone déformable (31) de paroi de carter comporte des ondulations circulaires concentriques (34).

8. Condensateur de puissance selon l'une quelconque des revendications 1 à 7, **caractérisé en ce que** la zone déformable (31) de paroi de carter a une forme générale de cône dont le sommet est dirigé vers le bobinage (1) de condensateur, le sectionneur intérieur (11) étant fixé audit sommet du cône.

9. Condensateur de puissance selon l'une quelconque des revendications 1 à 8, **caractérisé en ce que** le condensateur est triphasé, comportant le premier enroulement (2) ainsi qu'un second et un troisième enroulements cylindriques, les trois enroulements étant coaxiaux et superposés autour d'un axe commun, se succédant selon la direction radiale pour former un enroulement central (14), un enroulement intermédiaire (15) et un enroulement externe (16), chaque enroulement ayant ses propres première (14a, 15a, 16a) et seconde (14b, 15b, 16b) couches conductrices de connexion portées respectivement par les première (3) et seconde (4) faces de connexion du bobinage (1).

10. Condensateur de puissance selon la revendication 9, **caractérisé en ce que** :
- deux premières couches conductrices de connexion (15a, 16a) de deux enroulements (15, 16) sont connectées électriquement l'une à l'autre et au premier conducteur de sortie (8),
- la première couche conductrice de connexion (14a) du troisième enroulement (14) est connectée à un second conducteur de sortie (8a), les premier (8) et second (8a) conducteurs de sortie traversant le passage (10) axial cylindrique,
- les trois secondes couches conductrices de connexion (14b, 15b, 16b) des trois enroulements (14, 15, 16) sont connectées électriquement à un troisième (17), à un quatrième (17a) et à un cinquième (17b) conducteurs de sortie respectifs.

11. Condensateur de puissance selon la revendication 10, **caractérisé en ce que** la connexion électrique des deux premières couches conductrices de connexion (15a, 16a) de deux enroulements (15, 16) est constituée par une continuité de métallisation de la première face extrême (3) du bobinage de condensateur entre deux premières couches conductrices (15a, 16a) de connexion adjacentes.

12. Condensateur de puissance selon l'une des revendications 10 ou 11, **caractérisé en ce que** des tronçons sectionnables (12, 19, 19a, 19b, 19c et 19d) des premier (8) et second (8a) conducteurs de sortie sont en prise avec le sectionneur intérieur (11) et ont une structure facilitant leur rupture par le sectionneur intérieur (11).

13. Condensateur de puissance selon la revendication 12, **caractérisé en ce que** la structure facilitant la rupture des tronçons sectionnables (12, 19, 19a, 19b, 19c et 19d) des premier (8) et second (8a) conducteurs de sortie en prise avec le sectionneur interne (11) est de type fusible dénudé.

14. Condensateur de puissance selon la revendication 13, **caractérisé en ce que** les premier (8) et second (8a) conducteurs de sortie passent par le passage (10) axial cylindrique au centre de l'enroulement central (14), les tronçons sectionnables (12, 19, 19a, 19b, 19c et 19d) à structure facilitant leur rupture passant par une des portions demi-cylindriques (29a, 29b) du manchon (13) séparées l'une de l'autre par une paroi électriquement isolante (28) pour isoler l'un de l'autre les tronçons sectionnables (12, 19, 19a, 19b, 19c et 19d) dénudés.

## Claims

1. Power capacitor in a sealed exterior casing (32), including a cylindrical axial capacitor winding (1) having:
- at least one first cylindrical axial winding (2) of a first armature and a second armature separated by a layer of insulation,
- opposite first (3) and second (4) end connection faces,
- a cylindrical lateral face (5),
- first (6) and second (7) conductive connection layers, respectively carried by the first (3) and second (4) end connection faces, respectively connected to the first and second armatures of the first winding (2), and electrically connected to a first output conductor (8) and another output conductor (9), respectively,
- an axial cylindrical passage (10) provided at the centre of the winding (1) for at least the first output conductor (8) to pass through,
- a disconnector device disposed on the first end connecting face (3),
**characterised in that** the disconnector device includes:
- on a face situated facing the first end connection face (3), a deformable exterior casing wall area (31) that is axially deformable along the axis of the winding,
- an interior cutter (11) fastened to a portion (33) of the deformable wall area (31) and interengaged with at least one cuttable section (12) of at least the first output conductor (8) to cut it by outward axial movement of the interior cutter (11) with the deformable casing wall area (31).

2. Power capacitor according to claim 1,
**characterised in that**:
- the sealed exterior casing (32) is formed by assembling two casing parts (32b, 32c) each having a respective transverse end wall (32a, 32f) and a respective lateral wall section (32e, 32g) and being connected to each other by axial engagement of the respective lateral wall sections (32e, 32g),
- a paste-like substance such as silicone grease is applied around the interior cutter (11) and on the interior face of the deformable casing wall area (31),
- a polymerised resin fills the interior space of the sealed exterior casing (32) around the cylindrical axial winding (1) and the interior cutter (11).

3. Power capacitor according to either of claims 1 or 2, **characterised in that** the interior cutter (11) includes an axial threaded section (25) engaged in a blind threaded housing (33a) carried by the central part (33) of the deformable wall area (31).

4. Power capacitor according to either of claims 1 or 2, **characterised in that** rotation blocking means (28) oppose axial rotation of the interior cutter (11) relative to the capacitor winding (1).

5. Power capacitor according to claim 4, **characterised in that** it includes a tubular sleeve (13) blocked against rotation and translation on the cylindrical axial winding (1), engaged in the axial cylindrical passage (10) and around the first output conductor (8), and having an end that projects from the axial cylindrical passage (10) on the first end connection face (3) and that includes means for guiding the interior cutter (11) in axial translation.

6. Power capacitor according to claim 5, **characterised in that** the rotation blocking means include:
- a plane longitudinal blade (28) engaged in the sleeve (13) on the winding axis (I-I) and separating the interior thereof into two substantially equal half-cylindrical portions (29),
- a groove (30) formed in the interior cutter (11) in which the flat blade (28) is engaged.

7. Power capacitor according to any of claims 1 to 6, **characterised in that** the deformable casing wall area (31) includes concentric circular undulations (34).

8. Power capacitor according to any of claims 1 to 7, **characterised in that** the deformable casing wall area (31) has a generally conical shape with the apex directed toward the capacitor winding (1), the interior cutter (11) being fixed to said apex of the cone.

9. Power capacitor according to any of claims 1 to 8, **characterised in that** the capacitor is a three-phase capacitor, including the first winding (2) and second and third cylindrical windings, these three windings being coaxial and superposed around a common axis in radial succession to form a central winding (14), an intermediate winding (15) and an external winding (16), each winding having its own first (14a, 15a, 16a) and second (14b, 15b, 16b) conductive connecting layers respectively carried by the first (3) and second (4) connecting faces of the winding (1).

10. Power capacitor according to claim 9, **characterised in that**:
- two first conductive connection layers (15a, 16a) of two windings (15, 16) are electrically connected to each other and to the first output conductor (8),
- the first conductive connecting layer (14a) of the third winding (14) is connected to a second output conductor (8a), the first (8) and second (8a) output conductors passing through the axial cylindrical passage (10),
- the three second conductive connecting layers (14b, 15b, 16b) of the three windings (14, 15, 16) are electrically connected to third (17), fourth (17a) and fifth (17b) output conductors, respectively.

11. Power capacitor according to claim 10, **characterised in that** the electrical connection of the first two conductive connecting layers (15a, 16a) of the two windings (15, 16) consists in continuity of metallisation of the first end face (3) of the capacitor winding between two adjacent first conductive connecting layers (15a, 16a).

12. Power capacitor according to either of claims 10 or 11, **characterised in that** cuttable sections (12, 19, 19a, 19b, 19c and 19d) of the first (8) and second (8a) output conductors are interengaged with the interior cutter (11) and have a structure facilitating breaking of them by the interior cutter (11).

13. Power capacitor according to claim 12, **characterised in that** the structure facilitating breaking of the cuttable sections (12, 19, 19a, 19b, 19c and 19d) of the first (8) and second (8a) output conductors interengaged with the internal cutter (11) is of the exposed fusible type.

14. Power capacitor according to claim 13,
**characterised in that** the first (8) and second (8a) output conductors pass through the axial cylindrical passage (10) at the centre of the central winding (14), the cuttable sections (12, 19, 19a, 19b, 19c and 19d) with a structure facilitating breaking them passing through one of the half-cylindrical portions (29a, 29b) of the sleeve (13) separated from each other by an electrically insulative wall (28) to isolate from each other the exposed cuttable sections (12, 19, 19a, 19b, 19c and 19d).

## Patentansprüche

1. Leistungskondensator in einem dichten äußeren Gehäuse (32), das eine zylindrische axiale Spule (1) des Kondensators enthält, mit:
- mindestens einer ersten zylindrischen Wicklung (2), die axial zu einer ersten und einer zweiten Armatur ist, die durch eine isolierende Schicht getrennt sind,
- einer ersten (3) und einer zweiten (4) äußeren gegenüberliegenden Verbindungsfläche,
- einer zylindrischen Seitenfläche (5),
- einer ersten (6) und einer zweiten (7) leitfähigen Verbindungsschicht, die von der ersten (3) bzw. der zweiten (4) äußeren Verbindungsfläche getragen ist, wobei sie mit der ersten Armatur, bzw. der zweiten Armatur der ersten Wicklung (2) verbunden sind und elektrisch mit einem ersten (8) bzw. mit einem weiteren Ausgangsleiter (9) verbunden sind,
- einer axialen zylindrischen Passage (10), die im Zentrum der Spule (1) für den Durchtritt von mindestens des ersten Ausgangsleiters (8) vorgesehen ist,
- einer Einrichtung zum Trennen, die an der ersten äußeren Verbindungsfläche (3) angeordnet ist,
**dadurch gekennzeichnet, daß** die Einrichtung zum Trennen aufweist:
- an einer der ersten äußeren Verbindungsflächen (3) gegenüberliegenden Fläche eine verformbare Zone (31) der Wand des äußeren Gehäuses, die axial längs der Wicklungsachse verformbar ist,
- einen inneren Trennschalter (11), der mit einem Teil (33) der verformbaren Zone (31) der Wand verbunden ist und mit mindestens einem trennbaren Teil (12) mindestens des ersten Ausgangsleiters (8) in Eingriff ist, um ihn durch eine axiale Verschiebung des inneren Trennschalters (11) mit der verformbaren Zone (31) der Wand des Gehäuses nach außen zu trennen.

2. Leistungskondensator nach Anspruch 1, **dadurch gekennzeichnet, daß**:
- das dichte äußere Gehäuse (32) durch Zusammenbau von zwei Gehäuseteilen (32b, 32c) gebildet ist, die jeweils eine äußere transversale Wand (32a, 32f) aufweisen und einen entsprechenden Abschnitt (32e, 32g) der Seitenwand und durch axialen Eingriff der entsprechenden Abschnitte (32e, 32g) der Seitenwand aneinander angeschlossen sind,
- eine pasteuse Substanz, wie z.B. ein Silikonfett, um den inneren Trennschalter (11) herum und auf die innere Fläche der verformbaren Zone (31) der Wand des Gehäuses aufgebracht ist,
- ein polymerisiertes Harz den inneren Raum des dichten äußeren Gehäuses (32) rings um die zylindrische axiale Spule (1) und den inneren Trennschalter (11) ausfüllt.

3. Leistungskondensator nach einem der Ansprüche 1 oder 2, **dadurch gekennzeichnet, daß** der innere Trennschalter (11) einen axialen Gewindeabschnitt (25) trägt, der mit einem Gewindesackloch (33a) in Eingriff steht, das an dem zentralen Teil (33) der verformbaren Zone (31) der Wand getragen ist.

4. Leistungskondensator nach einem der Ansprüche 1 oder 2, **dadurch gekennzeichnet, daß** ein Mittel zum Blockieren einer Rotation (28) sich einer relativen axialen Rotation des inneren Trennschalters (11) in Bezug auf die Spule (1) des Kondensators widersetzt.

5. Leistungskondensator nach Anspruch 4, **dadurch gekennzeichnet, daß** er eine rohrförmige Muffe (13) aufweist, die in Drehrichtung und Translation an der zylindrischen axialen Spule (1) blockiert ist, in die axiale zylindrische Passage (10) und rings um den ersten Ausgangsleiter (8) eingreift, wobei sie ein Ende hat, das über die axiale zylindrische Passage (10) an der ersten äußeren Verbindungsfläche (3) hinausragt und Mittel zum Führen des inneren Trennschalters (11) in axialer Translation bildet.

6. Leistungskondensator nach Anspruch 5, **dadurch gekennzeichnet, daß** das Mittel zum Blockieren einer Rotation enthält:
- eine ebene längsverlaufende Klinge (28), die längs der Wicklungsachse (I-I) in die Muffe (13) eingreift und das Innere derselben in zwei halbzylindrische im wesentlichen gleiche Teile (29) unterteilt,
- eine in dem inneren Trennschalter (11) ausgearbeitete Rille (30), in die die ebene Klinge (28) eingreift.

7. Leistungskondensator nach irgendeinem der Ansprüche 1 bis 6, **dadurch gekennzeichnet, daß** die verformbare Zone (31) der Wand des Gehäuses konzentrische ringförmige Wellen (34) aufweist.

8. Leistungskondensator nach irgendeinem der Ansprüche 1 bis 7, **dadurch gekennzeichnet, daß** die verformbare Zone (31) der Wand des Gehäuses eine generell konische Form hat, deren Spitze zur Spule (1) des Kondensators ausgerichtet ist, wobei der innere Trennschalter (11) an der genannten Spitze des Konus befestigt ist.

9. Leistungskondensator nach irgendeinem der Ansprüche 1 bis 8, **dadurch gekennzeichnet, daß** der Kondensator dreiphasig ist, die erste Wicklung (2) sowie auch zweite und dritte zylindrische Wicklungen aufweist, wobei die drei Wicklungen koaxial sind und um eine gemeinsame Achse übereinanderliegend sind, wobei sie sich in radialer Richtung aneinander reihen, um eine zentrale Wicklung (14), eine zwischenliegende Wicklung (15) und eine äußere Wicklung (16) zu bilden, wobei jede Wicklung ihre eigene erste (14a, 15a, 16a) und zweite (14b, 15b, 16b) leitfähigen Verbindungsschichten aufweist, die von den ersten (3) und zweiten (4) Verbindungsflächen der Spule (1) getragen sind.

10. Leistungskondensator nach Anspruch 9, **dadurch gekennzeichnet, daß**:
- zwei erste leitfähige Verbindungsschichten (15a, 16a) von zwei Wicklungen (15, 16) elektrisch miteinander und mit dem ersten Ausgangsleiter (8) verbunden sind,
- die erste leitfähige Verbindungsschicht (14a) der dritten Wicklung (14) mit einem zweiten Ausgangsleiter (8a) verbunden ist, wobei der erste (8) und zweite (8a) Ausgangsleiter die axiale zylindrische Passage (10) durchqueren,
- die drei zweiten leitfähigen Verbindungsschichten (14b, 15b, 16b) der drei Wicklungen (14, 15, 16) elektrisch mit einem dritten (17), mit einem vierten (17a) und mit einem fünften (17b) entsprechenden Ausgangsleiter elektrisch verbunden sind.

11. Leistungskondensator nach Anspruch 10, **dadurch gekennzeichnet, daß** die elektrische Verbindung der zwei ersten leitfähigen Verbindungsschichten (15a, 16a) von zwei Wicklungen (15, 16) durch eine stetige Metallisierung der ersten äußeren Fläche (3) der Spule des Kondensators zwischen zwei benachbarten ersten leitfähigen Verbindungsflächen (15a, 16a) gebildet ist.

12. Leistungskondensator nach einem der Ansprüche 10 oder 11, **dadurch gekennzeichnet, daß** die trennbaren Abschnitte (12, 19, 19a, 19b, 19c und 19d) der ersten (8) und zweiten (8a) Ausgangsleiter mit dem inneren Trennschalter (11) in Eingriff stehen und eine Struktur haben, die ihren Bruch durch den inneren Trennschalter (11) erleichtern.

13. Leistungskondensator nach Anspruch 12, **dadurch gekennzeichnet, daß** die Struktur, die einen Bruch der trennbaren Abschnitte (12, 19, 19a, 19b, 19c und 19d) der ersten (8) und zweiten (8a) Ausgangsleiter im Eingriff mit dem inneren Trennschalter (11) erleichtern, vom Typ einer entblößten Schmelzsicherung ist.

14. Leistungskondensator nach Anspruch 13, **dadurch gekennzeichnet, daß** der erste (8) und zweite (8a) Ausgangsleiter durch die axiale zylindrische Passage (10) im Zentrum der zentralen Wicklung (14) verlaufen, wobei die abtrennbaren Abschnitte (12, 19, 19a, 19b, 19c und 19d) mit einer Struktur, die deren Bruch erleichtern, durch eine der halbzylindrischen Teile (29a, 29b) der Muffe (13) verlaufen, wobei sie gegeneinander durch eine elektrisch isolierende Wand (28) getrennt sind, um die trennbaren entblößten Abschnitte (12, 19, 19a, 19b, 19c und 19d) gegeneinander zu isolieren.
